# EUROPEAN PATENT APPLICATION

(11) **EP 4 703 996 A1**
(43) Date of publication of application: **04.03.2026**
(21) Application number: 24196842.9
(22) Date of filing: 27.08.2024
(51) Int. Cl.: G06Q 10/08, B65G 1/04, B66F 9/06, B66F 9/075, B66F 9/24

(54) **COMPUTER-IMPLEMENTED METHOD FOR DETERMINING A POSITION OF A ROBOTIC CONTAINER-HANDLING VEHICLE**

(71) Applicant: AutoStore Technology AS, 5578 Nedre Vats (NO)
(72) Inventor: VERSVIK, Eivind, 5578 Nedre Vats (NO)
(74) Representative: Kilburn & Strode LLP

(57) **Abstract**

The disclosure relates to a computer-implemented method for determining a position of a robotic container-handling vehicle in an automated storage and retrieval system, the method comprising: receiving a first value indicative of a weight of a first storage container handled by the robotic container-handling vehicle; identifying, using the first value, a position of the first storage container in the automated storage and retrieval system from a database of stored weights and positions of storage containers in the automated storage and retrieval system; and determining, from the identified position of the first storage container, the position of the robotic container-handling vehicle.

## Description

### TECHNICAL FIELD

The disclosure relates to a computer-implemented method for determining a position of a robotic container-handling vehicle. More particularly, it relates to a computer-implemented method for determining a position of a robotic container-handling vehicle in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles are capable of moving along specified routes on the rail system. In order to follow specified routes on the rail system, the robotic container-handling vehicles may include sensor devices that can track their position relative to the rail system. For example, the robotic container-handling vehicles may include optical sensors that count the number of rails of the rail system that the robotic container-handling vehicle crosses in a particular direction. Alternatively, external devices may be used to track locations of one or more robotic container-handling vehicles relative to the rail system.

In some cases, the sensing devices (either integral to the robotic container-handling vehicles, or external) can temporarily or permanently fail. For example, a sensing device may develop a fault or become damaged. As another example, an optical sensor may become soiled. In these cases, the position of the robotic container-handling vehicle on the rail system cannot be determined. As a result, the robotic container-handling vehicle is 'lost', and is consequently unable to carry out an instruction to follow a route to a particular location on the rail system. In addition, the `lost' robotic container-handling vehicle constitutes a safety hazard for other robotic container-handling vehicles on the rail system, in view of the risk of collision with the 'lost' robotic container-handling vehicle.

In view of the risk of collisions, one solution is to temporarily cease operation of all robotic container-handling vehicles on the rail system, so that the 'lost' robotic container-handling vehicle can be identified and retrieved. It will be appreciated, however, that ceasing operation of the robotic container-handling vehicles creates significant downtime for the automated storage and retrieval system, thereby reducing throughput and efficiency of the automated storage and retrieval system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a flowchart of a method of determining a position of a robotic container-handling vehicle;

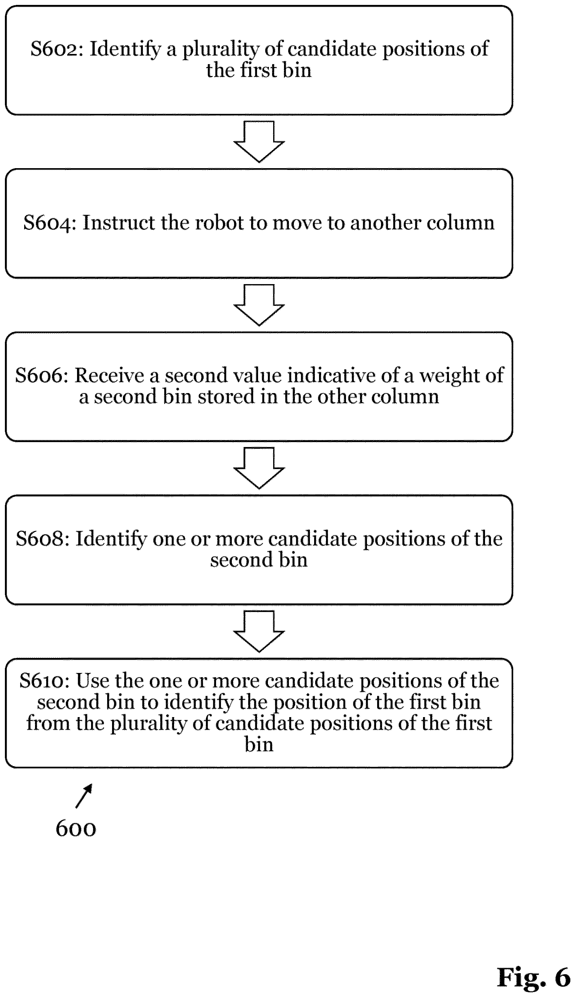

Fig. 6 shows a flowchart of a method of identifying a position of a storage container from a plurality of candidate positions of the storage container;
Fig. 7 shows a schematic diagram of weights of storage containers and stack heights of storage containers.

### DETAILED DESCRIPTION

In overview, the disclosure relates to a computer-implemented method for determining the position of a robotic container-handling vehicle in an automated storage and retrieval system. In general, the method involves measuring a storage container weight, and using the measured storage container weight and a database of stored weights and positions of storage containers to identify the position of the robotic container-handling vehicle. First, a value indicative of a weight of a storage container handled by the robotic container-handling vehicle is received. Next, a position of the storage container in the automated storage and retrieval system is identified from a database of stored weights and positions of storage containers (e.g., by querying the database using the received value). Finally, the position of the robotic container-handling vehicle is determined from the identified position of the storage container. Accordingly, a measured storage container weight and a database of stored weights and positions of storage containers can be used to determine the position of a `lost' robotic container-handling vehicle.

### Automated storage and retrieval system overview

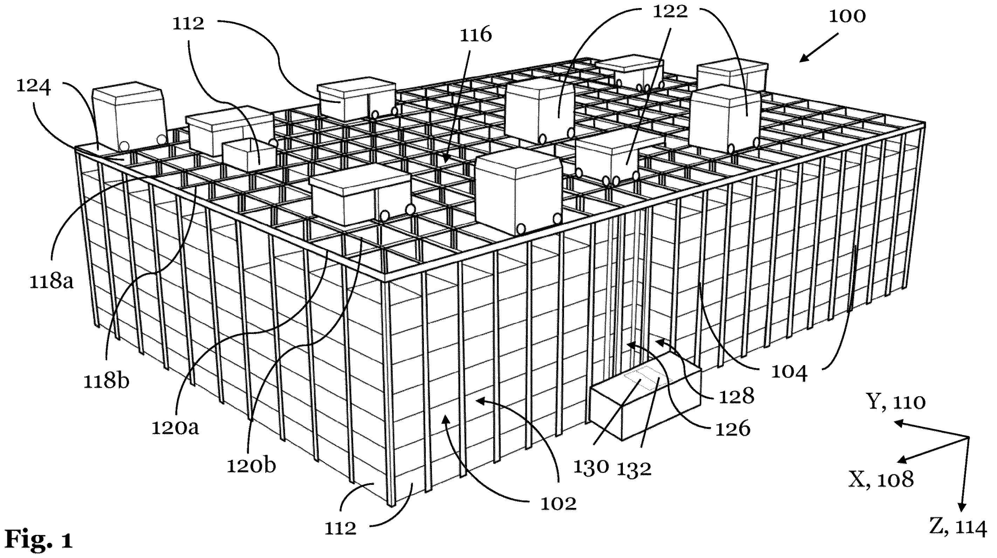

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

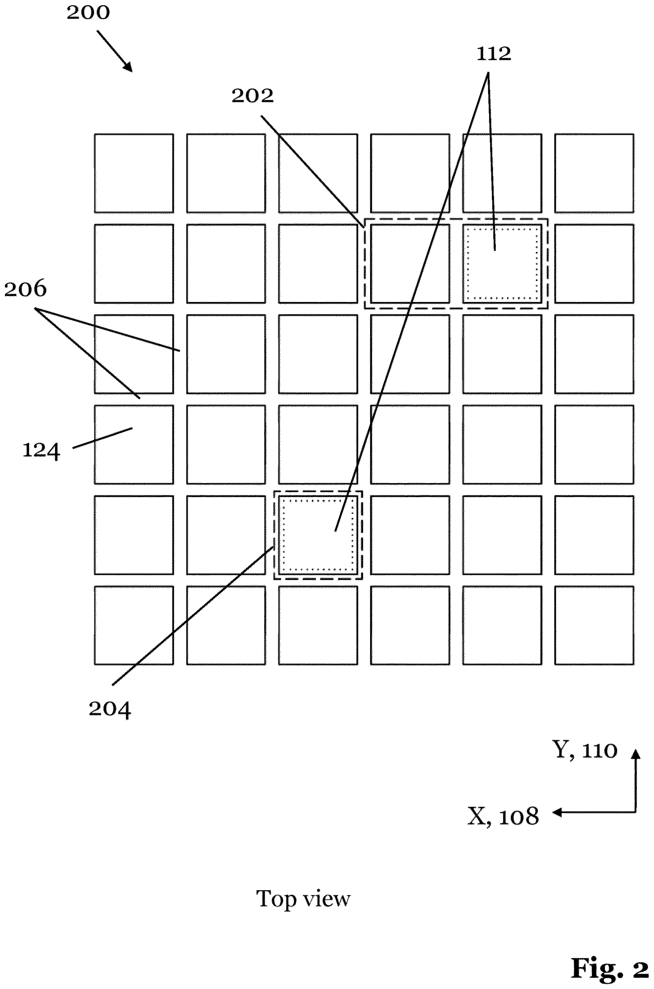

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

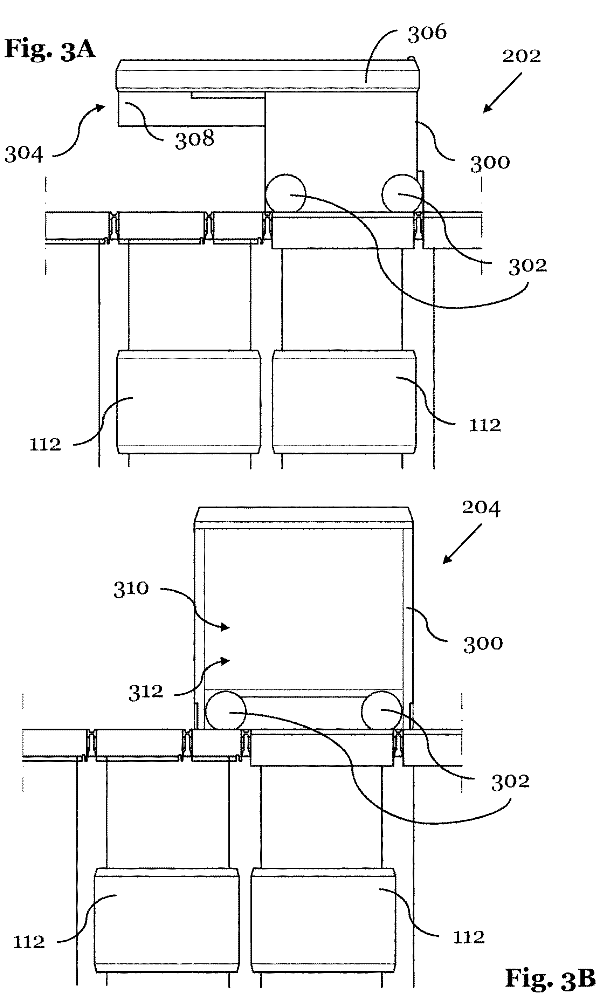

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

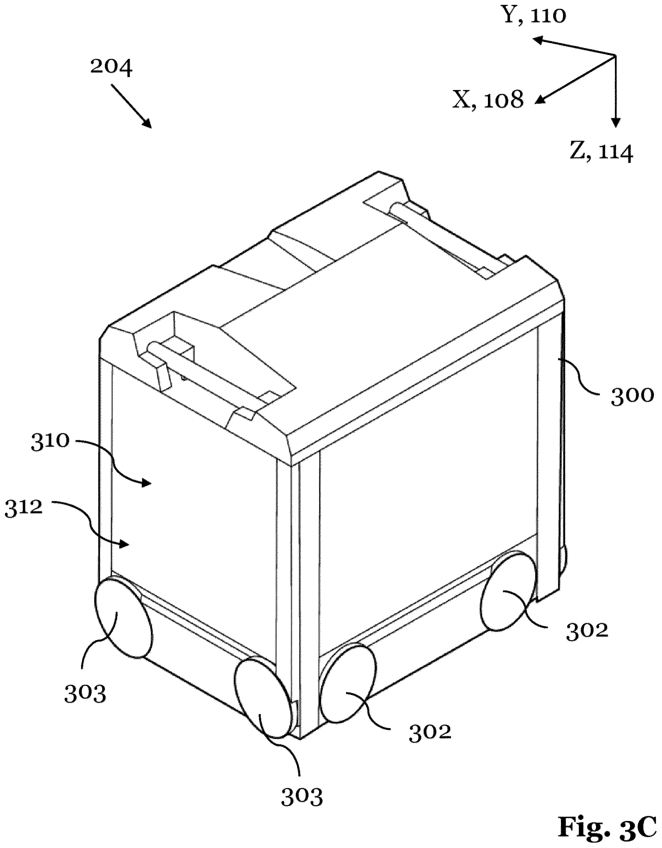

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

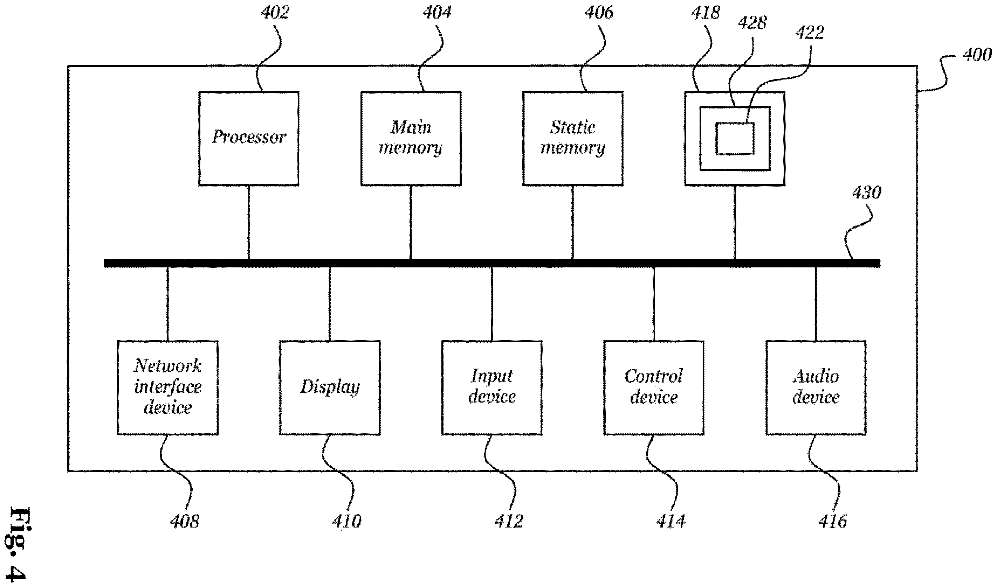

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Determining a position of a robot with an unknown location

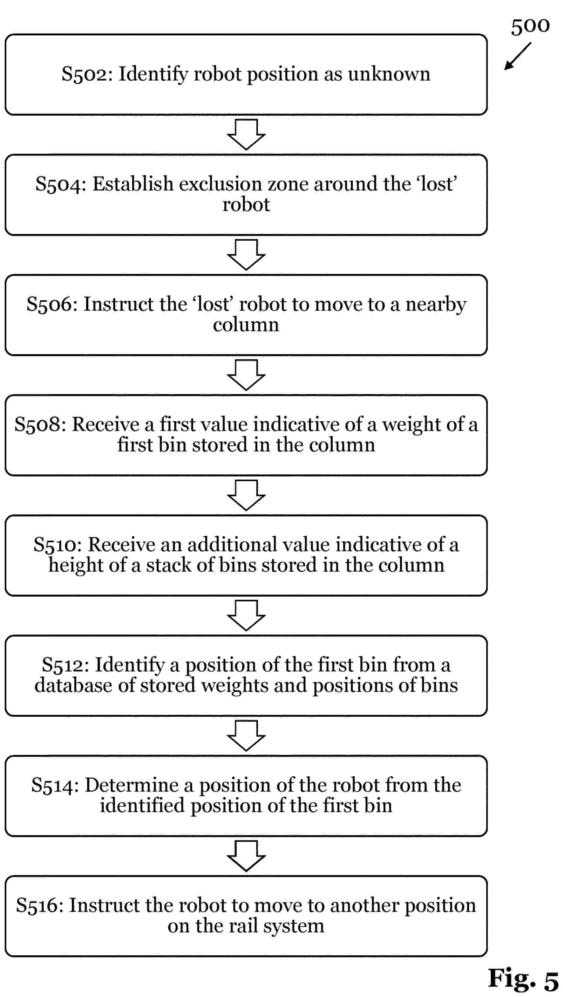

Fig. 5 is a flowchart of a method 500 of determining a position of a robot 202, 204 on the rail system 116. The method 500 may be implemented by the processing system 400, or by a distinct processing system (e.g., by a processing system of the robot 202, 204). As explained above, a database of the processing system 400 stores, in association with the unique identifier of a bin 112, the position of the bin 112 and, optionally, the content of the bin 112. In the examples described herein, the database also stores, in association with the position of the bin 112, a weight value for the bin 112.

As explained above, a robot 202, 204 operating on the rail system 116 may be unable to determine its position, meaning that the robot 202, 204 is unable to carry out an instruction to follow a route to a particular location on the rail system 116. In addition, the unknown position of the robot 202, 204 means that the robot 202, 204 is a safety hazard for other robots 202, 204, in view of the risk of collision with the robot 202, 204 with unknown position.

At S502, a robot position is identified as unknown (meaning that the robot 202, 204 is 'lost'). For example, a robot 202, 204 may detect that its sensing device for detecting rail crossings on the rail system 116 is not functioning. In response, the robot 202, 204 may inform the processing system 400 that its position is unknown. Alternatively, an external device may detect (for example, as a result of sensor failure), that a position of a robot 202, 204 is unknown.

At S504, an exclusion zone is established around the `lost' robot 202, 204. For example, the processing system 400 may determine an exclusion zone around an estimated position of the `lost' robot 202, 204 and/or the last known position of the `lost' robot 202, 204. The processing system 400 may then prevent other robots 202, 204 from entering the exclusion zone. For example, the processing system 400 may alter routes of other robots 202, 204 moving on the rail system 116 so that those routes do not pass within the exclusion zone. The exclusion zone extends beyond the footprint of the 'lost' robot in view of the uncertainty as to the position of the `lost' robot 202, 204. The exclusion zone may be large enough to allow the `lost' robot 202, 204 to conduct a plurality of tests to determine its position while remaining within the exclusion zone.

At S506, the `lost' robot 202, 204 is instructed to move to a nearby column 102 of the grid 100. In one example, each robot 202, 204 includes a plurality of sensors that detect whether the robot 202, 204 (and specifically the gripping device 308) is positioned directly over a column 102 of the grid 100 (as opposed to over one of the rails 118, 120 of the rail system 116). These sensors are different from the sensors that detect the number of rail crossings (which may have failed in order for the robot's position to be unknown). Accordingly, the `lost' robot 202, 204 can be instructed to move in a particular direction until the sensors detect that the robot 202, 204 is positioned directly over a column 102.

At S508, a first value indicative of a weight of a first bin 112 stored in the column 102 is received. In one example, the first value is received from the `lost' robot 202, 204. For example, the `lost' robot 202, 204 may lower its gripping device 308 (e.g., under instruction) and to lift a bin 112 within the column 102. The 'lost' robot 202, 204 may determine a weight of the bin 112 from a torque value of its motor (as described in more detail below), and send the determined weight of the bin 112 to the processing system 400. Alternatively, the `lost' robot 202, 204 may transmit its torque value(s) to the processing system 400, and the processing system 400 may subsequently determine a weight value for the bin 112 from the received torque value(s).

Optionally, at S510, an additional value indicative of a height of a stack of bins 112 in the column 102 is received. In one example, the additional value is received from the `lost' robot 202, 204. For example, when lowering its gripping device 308 at S508, the `lost' robot 202, 204 may determine how far the gripping device 308 is lowered into the column 102. The 'lost' robot 202, 204 or the processing system 400 may then correlate that value to a height of the stack of bins 112 in the column 102 and/or to the position of the uppermost bin 112 in that column 102 in the Z-direction 114.

At S512, a position of the bin 112 is identified using the first value. The position of the bin 112 is identified from the database of stored weights and positions of bins 112 in the grid 100. For example, the processing system 400 queries the database using the first value indicative of the weight of the bin 112, in order to identify one or more candidate positions of the bin 112 in the grid 100. If there is only one bin 112 in the grid 100 having a stored weight that matches the first value, then the position of the bin 112 in the grid 100 can be identified. It will be appreciated that only the stored weights of the uppermost bins 112 in each column 102 need to be queried, because the first value is for the uppermost bin 112 in the column 102 that the `lost' robot 202, 204 is positioned over.

If the additional value indicative of the height of the stack of bins 112 in the column 102 was received at S510, then the additional value can be used in combination with the first value to identify the position of the bin 112 at S512. The additional value provides information about the position of the bin 112 in the Z-direction 114. This information can be used to narrow down the candidate positions for the bin 112. For example, if the first bin 112 is stacked on top of two other bins 112 in the column 102, then only the stored weights of bins 112 having a position Z=3 in the grid 100 need to be queried using the first value.

If multiple candidate positions are identified for the bin 112 at S512, then the processing system 400 carries out the method 600 (described further below). If only one position for the bin 112 is identified at S512, the method 500 proceeds to S514, at which a position of the robot 202, 204 is determined from the position of the bin 112 identified at S512. For example, the position of the robot 202, 204 in the X-direction 108 and the Y-direction 110 can be determined from the stored position of the bin 112 in the X-direction 108 and the Y-direction 110.

Once the position of the robot 202, 204 has been determined at S514, the method optionally proceeds to S516, at which the robot 202, 204 is instructed to move to another position on the rail system 116. For example, the robot 202, 204 may be instructed to return to a service area so that its sensing device(s) can be serviced and/or replaced. Alternatively, if the robot position was unknown as a result of temporary failure of the sensing device(s), then the robot 202, 204 may be instructed to carry out a particular task in the automated storage and retrieval system.

### Procedure where no unique position for the first bin can be determined

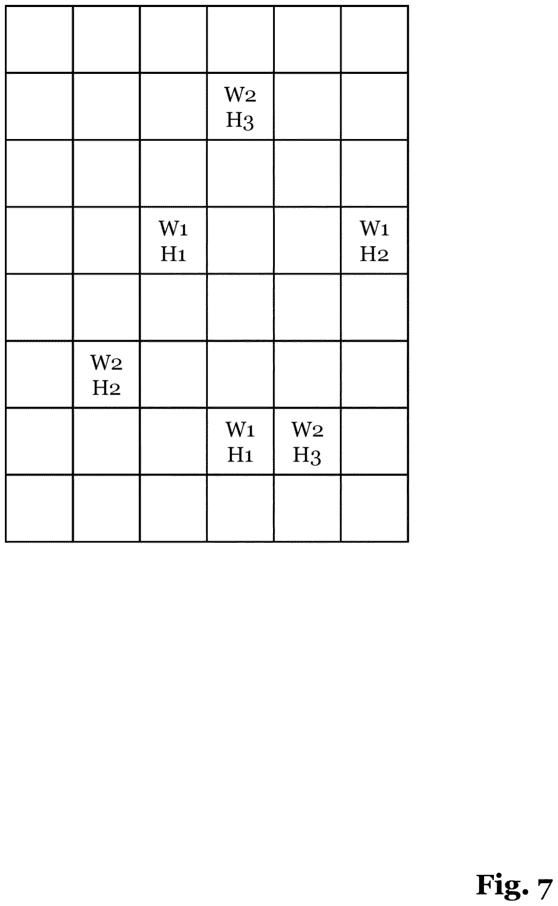

In some cases, the processing system 400 may be unable to determine a position of the robot 202, 204 from the first value received at S508 and from the additional value optionally received at S510. Fig. 7 shows an example where a first value W1 indicative of the weight of the bin 112 is received at S508 and, optionally, an additional value H1 indicative of the position of the bin 112 in the Z-direction 114 is received at S510. As shown in Fig. 7, it can be seen that there are three candidate positions of columns 102 storing bins 112 with weight W1. If the additional value H₁ is received at S510, it can be seen that the number of candidate positions for the bin 112 is reduced to two. However, no unique position of the bin 112 can be determined from the received data.

In this case, the method 600 is carried out. The method 600 may be implemented by the processing system 400, or by a distinct processing system (e.g., by a processing system of the robot 202, 204).

At S602, a plurality of candidate positions of the first bin 112 are identified. For example, the plurality of candidate positions of the first bin 112 may be identified from the results of querying the database at S512 with the first value.

At S604, the robot 202, 204 is instructed to move to a location from which a second bin 112 can be accessed (e.g., another column 102). For example, the robot 202, 204 may be instructed to move to a column 102 that is adjacent to the column 102 that the robot 202, 204 is positioned directly over. In the event that the sensing devices that detect rail crossings are still not functioning, the robot 202, 204 can be instructed to move a short distance (i.e., less than one column width) in one direction, and then to continue moving in that direction until other sensing devices of the robot 202, 204 detect that the robot 202, 204 is positioned directly over the adjacent column 102.

At S606, a second value indicative of a weight of a second bin 112 stored in the adjacent column 102 is received. The second value may be received in the same way as the first value received at S508. The relative position between the first bin 112 and the second bin 112 is known. For example, if the robot 202, 204 is instructed to move to an adjacent column at S604, then it is known that the second bin 112 is in a column 102 that is adjacent to the column 102 storing the first bin 112. Optionally, a second additional value indicative of a position of the second bin 112 in the Z-direction is also received at S606, in the same way as the additional value is received at S510.

At S608, one or more candidate positions of the second bin 112 are identified. The position of the second bin 112 is identified from the database of stored weights and positions of bins 112 in the grid 100. For example, the processing system 400 queries the database using the second value indicative of the weight of the bin 112, in order to identify one or more candidate positions of the second bin 112 in the grid 100. If there is only one bin 112 in the grid 100 having a stored weight that matches the second value, then it will be appreciated that the position of the second bin 112 in the grid 100 can be identified, and that the method may then return to S514. Optionally, the one or more candidate positions of the second bin 112 may be identified using the second additional value indicative of the position of the second bin 112 in the Z-direction, if this is received at S606.

If there are multiple candidate positions for the second bin 112, then the multiple candidate positions for the second bin 112 can be used to identify, at S610, the position of the first bin 112 from the plurality of candidate positions of the first bin 112 identified at S602. The candidate positions for the second bin 112 can be used to narrow down the candidate positions for the first bin 112 using the known relative position between the first bin 112 and the second bin 112.

Returning to the example shown in Fig. 7, it can be seen that for a second value W2 indicative of the weight of the second bin 112, there are three candidate positions. In this example, a second additional value H3 indicative of the position of the second bin 112 in the Z-direction 114 does not provide a unique position of the second bin 112, because there are two bins 112 with weight W2 and position H3 in the Z-direction. However, only one of these candidate positions for the second bin 112 is adjacent to a candidate position for the first bin 112. Accordingly, the position of the second bin 112 can be determined, and the method 600 can return to S514.

If a unique position of the robot 202, 204 cannot be determined from the candidate positions of the second bin 112, then S604 to S610 can be repeated until a unique position of the robot 202, 204 has been determined. In some examples, operation of the robots 202, 204 on the rail system 116 maybe ceased if the position of the `lost' robot 202, 204 has not been determined after a certain number of iterations of method 600.

### Bin weight measurements

In order to store weights of bins 112 in the database, bins 112 can be weighed at ports 130, 132 (i.e., ports 130, 132 comprising a scale weight) and/or by robots 202, 204. In one example, a unique identifier of a bin 112 is stored in association with a first tag indicating the bin weight, and a second tag for a bin weight measurement. When a bin 112 is weighed, the bin weight measurement tag is updated. A weight indicated by the bin weight tag may then be updated using the bin weight measurement tag, if the new weight is precise enough.

For example, when a bin 112 is opened or removed, the bin weight tag can be updated to indicate that the weight of the bin 112 is unknown. When a bin 112 has an unknown weight and a bin weight measurement is received (via the bin weight measurement tag), the bin weight is set as the value indicated by the bin weight measurement.

When a bin 112 already has a weight value indicated by the bin weight tag, the bin weight is set as the new weight value indicated by the bin weight measurement if the new weight is precise enough. Weight values are stored with tolerances (or precisions) indicating the precision of the weight measurement. Tolerances may be provided by the module (port 130, 132, robot 202, 204, etc.) that weighs the bin 112, or may be preset values that are accessed by the processing system 400 and are associated with the module that weighs the bin 112. A bin weight measurement provided by a port 130, 132 may have a precision of +/- 500g (for a quick measurement) or +/- 100g (for a more thorough measurement). In contrast, a bin weight measurement provided by a robot 202, 204 may have a precision of +/- 2000g.

If the new weight value could fall within the existing weight value (accounting for the tolerances of both weight values) such that there is an overlap between the new weight value and the existing weight value when accounting for the tolerances of both weight values, then the bin weight tag is updated with the weight value that has higher precision. On the other hand, if the new weight value is outside the existing weight value (accounting for the tolerances of both weight values) such that there is no overlap between the new weight value and the existing weight value when accounting for the tolerances of both weight values, then the bin weight tag is updated with the new weight value.

As an example, if a bin weight tag has a value "unknown" and a bin weight measurement of 3500g +/- 100g is received, then the bin weight tag is updated with the bin weight of 3500g and the tolerance of 100g. If a subsequent bin weight measurement of 3900g +/- 1000g is received, then the bin weight tag is not updated, because (i) the subsequent weight value could fall within the existing weight value when accounting for the tolerances of the weight values, and (ii) the existing weight value has higher precision. However, if a subsequent bin weight measurement of 5000g +/- 1000g is received, then the bin weight tag is updated with the subsequent bin weight value, because the subsequent weight value does not fall within the existing weight value when accounting for the tolerances of the weight values. Therefore, the bin weight tag is updated with the bin weight of 5000g and the tolerance of 1000g.

In some examples, a tolerance is determined or received for a bin weight value received at S508 from a `lost' robot 202, 204. The identification of the position of the bin 112 weighed by the `lost' robot 202, 204 at S512 may comprise comparing the weight value received from the `lost' robot 202, 204 and the tolerance of that weight value with weight values of bins 112 and respective tolerances of those weight values stored in the database. Candidate positions for the bin 112 identified at S602 may comprise any bins 112 for which the bin weight value received at S508 could fall within the stored bin weight value, when accounting for the tolerances of both weight values.

### Estimating bin weight using robots

In one example, a robot 202, 204 (or the processing system 400) estimates a weight value of a bin 112 from the torque of the robot's motor during lifting of the bin 112. The motor torque is measured at a point where it has stabilised (i.e., when the lift velocity reaches a certain value, such as 0.6 m/s). Motor torque is assumed to increase linearly with bin weight, such that a linear relationship exists between stabilised motor torque and bin weight. That is: bin_weight = a * motor_torque + c. The parameters a (gradient) and c (intercept) can be found through calibration of a number of motor torque values measured when lifting bins 112 of known weight. Calibrated parameters may then be stored by the robots 202, 204 or at the processing system 400 so that a measured torque value can be converted to an estimate of bin weight.

### Penultimate comments

The present disclosure also relates to a computer-implemented method, comprising: receiving a measurement value indicative of a weight of a storage container in an automated storage and retrieval system; comparing the measurement value to a stored weight of the storage container; determining whether the stored weight of the storage container is to be updated with the measurement value; and responsive to determining that the stored weight of the storage container is to be updated, updating the stored weight of the storage container with the measurement value.

The received measurement value may comprise a tolerance of the measurement value. Alternatively, the method may further comprise determining a tolerance of the measurement value.

The measurement value may be received from a port of the automated storage and retrieval system. Alternatively, the measurement value may be received from a robotic container-handling vehicle in the automated storage and retrieval system.

Comparing the measurement value to the stored weight of the storage container may comprise comparing the measurement value and the tolerance of the measurement value to the stored weight of the storage container and a tolerance of the stored weight of the storage container.

Determining whether the stored weight of the storage container is to be updated with the measurement value may comprise determining whether the stored weight of the storage container is unknown. If the stored weight of the storage container is unknown, it is determined that the stored weight of the storage container is to be updated with the measurement value.

Determining whether the stored weight of the storage container is to be updated with the measurement value may comprise determining whether there is an overlap between the measurement value and the stored weight of the storage container, when accounting for the tolerance of the measurement value and the tolerance of the stored weight of the storage container. If it is determined that there is no overlap, then it is determined that the stored weight of the storage container is to be updated with the measurement value. If it is determined that there is an overlap, then the tolerance of the measurement value is compared with the tolerance of the stored weight of the storage container. If the tolerance of the measurement value is higher than the tolerance of the stored weight of the storage container (i.e., the measurement value is less precise than the stored weight of the storage container), then it is determined that the stored weight of the storage container is not to be updated with the measurement value. If the tolerance of the measurement value is lower than the tolerance of the stored weight of the storage container (i.e., the measurement value is more precise than the stored weight of the storage container), then it is determined that the stored weight of the storage container is to be updated with the measurement value.

The present disclosure also relates to a computer-implemented method, comprising: identifying a torque value of a motor of a robotic container-handling vehicle operating in an automated storage and retrieval system during lifting of a storage container; and determining a weight of the storage container based on the torque value.

The method may be implemented at the robotic container-handling vehicle. Identifying the torque value of the motor may comprise lifting the storage container; and waiting for the torque value to stabilise. The torque value may stabilise when the velocity of lifting the storage container reaches a threshold velocity.

Determining the weight of the storage container may comprise using a calibrated linear relationship between motor torque during lifting of storage containers and weights of storage containers. The method may further comprise calibrating the linear relationship between motor torque during lifting of storage containers and weights of storage containers. Calibrating the linear relationship may comprise determining parameters of the linear relationship, wherein the parameters comprise a gradient value and an intercept value. Calibrating the linear relationship may comprise determining the parameters by identifying a plurality of torque values of motors of robotic container-handling vehicles during lifting of a respective plurality of storage containers with known weights.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method for determining a position of a robotic container-handling vehicle in an automated storage and retrieval system, the method comprising:
receiving a first value indicative of a weight of a first storage container handled by the robotic container-handling vehicle;
identifying, using the first value, a position of the first storage container in the automated storage and retrieval system from a database of stored weights and positions of storage containers in the automated storage and retrieval system; and
determining, from the identified position of the first storage container, the position of the robotic container-handling vehicle.

2. The method of claim 1, wherein the first value is received from the robotic container-handling vehicle.

3. The method of claim 1 or claim 2, wherein the first value is determined from a torque value of a motor of the robotic container-handling vehicle during handling of the storage container.

4. The method of any of claims 1 to 3, wherein identifying the position of the position of the storage container in the automated storage and retrieval system comprises:
identifying, from the database, a plurality of candidate positions of the first storage container using the first value;
receiving a second value indicative of a weight of a second storage container handled by the robotic container-handling vehicle, wherein a position of the second storage container relative to the first storage container is known;
identifying, using the second value, a plurality of candidate positions of the second storage container in the automated storage and retrieval system from the database; and
identifying, using the plurality of candidate positions of the second storage container, the position of the first storage container from the plurality of candidate positions of the first storage container.

5. The method of claim 4, further comprising:
in response to identifying the plurality of candidate positions of the first storage container, instructing the robotic container-handling vehicle to move to a location from which the second storage container can be accessed by the robotic container-handling vehicle.

6. The method of any of claims 1 to 5, further comprising:
receiving an additional value indicative of a height of a stack of storage containers stored in the automated storage and retrieval system; and
identifying, from the database, the position of the first storage container using the first value and the additional value, wherein the database stores heights of stacks of storage containers stored in the automated storage container and retrieval system.

7. The method of claim 6, wherein the stack of storage containers includes the first storage container.

8. The method of any of claims 1 to 7, further comprising:
determining an exclusion zone relative to the robotic container-handling vehicle; and
preventing other robotic container-handling vehicles in the automated storage and retrieval system from entering the exclusion zone.

9. The method of any of claims 1 to 8, further comprising instructing the robotic container-handling vehicle to move from the determined position to a further position in the automated storage and retrieval system.

10. The method of any of claims 1 to 9, further comprising, for each of a plurality of storage containers:
receiving a value indicative of a weight of the storage container in the automated storage and retrieval system; and
storing the value indicative of the weight of the storage container in the database in association with a position of the storage container.

11. The method of claim 10, wherein the value is received from a robotic container-handling vehicle in the automated storage and retrieval system.

12. The method of claim 10 or claim 11, wherein the value is received from a port of the automated storage and retrieval system, wherein the port comprises a weighing scale.

13. The method of any of claims 10 to 12, further comprising:
determining a tolerance of the received value;
wherein storing the value indicative of the weights of the storage container in the database in association with the position of the storage container comprises storing the tolerance of the received value in association with the value.

14. The method of claim 13, wherein identifying the position of the first storage container in the automated storage and retrieval system comprises:
comparing, using the database, the first value and a tolerance of the first value with stored weights of storage containers in the automated storage and retrieval system and respective tolerances of the stored weights.

15. A computer-readable medium comprising instructions that, when executed by one or more processors of one or more computing devices, cause the one or more computing devices to carry out the method of any of claims 1 to 14.
